(19) Europäisches Patentamt / European Patent Office / Office européen des brevets

(11) **EP 2 911 029 B1**

(12) **EUROPEAN PATENT SPECIFICATION**

(45) Date of publication and mention
of the grant of the patent:
**27.05.2020 Bulletin 2020/22**

(21) Application number: **13846456.5**

(22) Date of filing: **31.05.2013**

(51) Int Cl.:
*G06F 1/16* (2006.01)          *H05K 5/02* (2006.01)

(86) International application number:
**PCT/JP2013/065240**

(87) International publication number:
**WO 2014/061302 (24.04.2014 Gazette 2014/17)**

(54) **MANIPULABLE DEVICE**

MANIPULIERBARE VORRICHTUNG

DISPOSITIF MANIPULABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.10.2012 JP 2012229643**

(43) Date of publication of application:
**26.08.2015 Bulletin 2015/35**

(73) Proprietor: **Sony Corporation
Tokyo 108-0075 (JP)**

(72) Inventors:
• **NAKAMURA, Takashi**
**Tokyo 108-0075 (JP)**
• **TACHIBANA, Kenji**
**Tokyo 108-0075 (JP)**
• **WATAMURA, Kenji**
**Tokyo 108-0075 (JP)**
• **SHIMIZU, Minoru**
**Tokyo 108-0075 (JP)**
• **MOTOISHI, Takuya**
**Tokyo 108-0075 (JP)**

(74) Representative: **MFG Patentanwälte
Meyer-Wildhagen Meggle-Freund
Gerhard PartG mbB
Amalienstraße 62
80799 München (DE)**

(56) References cited:
WO-A1-2012/111634          JP-A- 2003 216 274
JP-A- 2005 165 637          JP-A- 2010 060 059
JP-A- 2011 065 616

**Description**

Technical Field

The present disclosure relates to an operation device.

Background Art

Recently, foldable operation devices such as notebook personal computers have been widely spread. Those operation devices generally include a main body including a keyboard and a display unit that is provided to be openable and closable with respect to the main body.

For example, as described in Patent Literature 1, there is also known an operation device having a mechanism in which, in a case where a display unit is opened, a main body is lifted by causing a part of the display unit to abut against a placement surface. Patent Literature 2 discloses an operation device comprising a main body and a cover body rotatable connected to the main body, wherein the main body is formed so that a middle portion of the lower surface is not in contact with a placement surface.

Citation List

Patent Literature

    Patent Literature 1: JP 2011-65616A
    Patent Literature 2: JP 2005-165637 A

Summary of Invention

Technical Problem

By the way, in a case where a step between a top surface on a front side seen from a user in an operation device and a placement surface is small, the user can place his/her hands without consciousness of a boundary between the top surface of a main body and the placement surface, and therefore the user uses the operation device more comfortably. Regarding this point, in the mechanism described in Patent Literature 1, a top surface on a front side of the main body becomes closer to the placement surface in accordance with rotation caused by lifting of the main body. However, further contrivance for reducing the step have been desired.

In view of this, the present disclosure proposes a novel and improved operation device capable of further reducing a step between a top surface of a main body and a placement surface.

Solution to Problem

According to one aspect the invention provides an operation device in accordance with claim 1. Further aspects of the invention are set forth in the dependent claims, the drawings and the following description of embodiments.

According to the present disclosure, there is provided an operation device including a main body that has a top surface on which an operation unit is provided, and an opening/closing member that is provided to be openable and closable with respect to the top surface of the main body, around a rotation axis positioned in an edge portion of a first side of the main body. When the opening/closing member is opened, the main body is pushed up by abutment of at least a part of the opening/closing member and a placement surface. A thickness of the main body is reduced from the first side toward a second side opposite to the first side.

Advantageous Effects of Invention

As described above, according to the present disclosure, it is possible to further reduce a step between a top surface of a main body and a placement surface.

Brief Description of Drawings

[FIG. 1] FIG. 1 is a perspective view illustrating an external appearance of an operation device 1 according to an embodiment of the present disclosure.

[FIG. 2] FIG. 2 is a side view illustrating an operation device 1 in a closed state in which an opening/closing member 3 is closed.

[FIG. 3] FIG. 3 is a side view illustrating an operation device 1 in an opened state in which an opening/closing member 3 is opened.

[FIG. 4] FIG. 4 is a side view illustrating an external appearance of a main body 2.

[FIG. 5] FIG. 5 is a side view illustrating a structure of an opening/closing member 3.

[FIG. 6] FIG. 6 is a side view illustrating an operation device 1 in an opened state, the operation device 1 being placed on a placement surface.

[FIG. 7] FIG. 7 is a side view illustrating a modification example of a structure of an operation device 1.

[FIG. 8] FIG. 8 is a side view illustrating a modification example of a structure of an operation device 1.

[FIG. 9] FIG. 9 is a side view illustrating a modification example of a structure of an operation device 1.

[FIG. 10] FIG. 10 is a side view illustrating a modification example of a structure of an operation device 1.

[FIG. 11] FIG. 11 is a planar view of an operation device 1 in an opened state.

[FIG. 12] FIG. 12 is a rear view of an operation device 1 in an opened state.

[FIG. 13] FIG. 13 is a front view of an operation device 1 in an opened state.

[FIG. 14] FIG. 14 is a right side view of an operation device 1 in an opened state.

[FIG. 15] FIG. 15 is a left side view of an operation device 1 in an opened state.

[FIG. 16] FIG. 16 is a bottom view of an operation device 1 in an opened state.

[FIG. 17] FIG. 17 is a block diagram illustrating a hardware configuration of an operation device 1.

[FIG. 18] FIG. 18 is a side view illustrating an operation device 1 in a state in which an opening/closing member 3 is closed.

[FIG. 19] FIG. 19 is a side view illustrating an operation device 1 in a case where an angle between an opening/closing member 3 and a placement surface is 60°.

[FIG. 20] FIG. 20 is a side view illustrating an operation device 1 in a case where an angle between an opening/closing member 3 and a placement surface is 105°.

[FIG. 21] FIG. 21 is a side view illustrating an operation device 1 in a case where an angle between an opening/closing member 3 and a placement surface is 135°.

[FIG. 22] FIG. 22 is a view for explaining an upper limit value F of a magnitude of a force applied to an opening/closing member 3 to satisfy a condition in which the opening/closing member 3 is not rotated with respect to a main body 2.

[FIG. 23] FIG. 23 is a view illustrating a first example of a relationship between an angle between a placement surface and an opening/closing member 3 and torque.

[FIG. 24] FIG. 24 is a view illustrating a first example of a relationship between an angle between a placement surface and an opening/closing member 3 and torque.

[FIG. 25] FIG. 25 is a view illustrating an example where magnets M are added to an operation device 1.

Description of Embodiments

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that, in this description and the drawings, structural elements that have substantially the same function and structure are sometimes distinguished from each other using different alphabets after the same reference sign. However, when there is no need in particular to distinguish structural elements that have substantially the same function and structure, the same reference sign alone is attached.

The present disclosure will be described in the following item order.

1. Basic structure of operation device
2. Structure of main body
3. Structure of opening/closing member
4. Condition of step
5. Six views of operation device
6. Hardware configuration
7. Setting of torque
8. Use of magnets
9. Conclusion

<1. Basic structure of operation device>

A technology according to the present disclosure can be implemented in various embodiments, as described below as an example. An operation device 1 according to an embodiment of the present disclosure includes:

A. a main body (2) having a top surface on which an operation unit is provided; and
B. an opening/closing member (3) that is provided to be openable and closable with respect to the top surface of the main body on a rotation axis (C) positioned in an edge portion on a first side of the main body, and
C. in a state in which the opening/closing member is opened, at least a part of the opening/closing member abuts against a placement surface, and
D. a thickness of the main body is reduced from the first side toward a second side opposite to the first side.

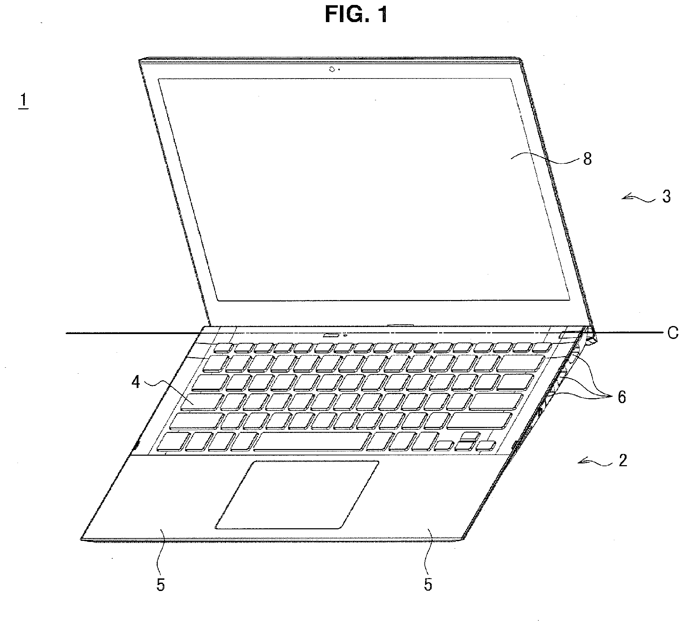

Hereinafter, first, there will be described a basic structure of the operation device 1 according to this embodiment of the present disclosure with reference to FIG. 1 to FIG. 3.

FIG. 1 is a perspective view illustrating an external appearance of the operation device 1 according to the embodiment of the present disclosure. As illustrated in FIG. 1, the operation device 1 according to the embodiment of the present disclosure includes a main body 2 and an opening/closing member 3.

A keyboard unit 4 and palm rests 5 are provided on a top surface of the main body 2. The keyboard unit 4 includes a plurality of keys and functions as an operation unit with which a user performs operation input. The palm rests 5 are positioned on a front side of the keyboard unit 4 so that a user can place his/her hands on the palm rests 5 when the user operates the keyboard unit 4. Note that, although FIG. 1 illustrates the keyboard unit 4 as an example of the operation unit, the operation unit may be another operation unit, such as a touchpad, a touch panel, a stick, a dial, and a trackball, and a combination thereof.

A plurality of external connection terminals 6 are provided on a side surface of the main body 2. The external connection terminals 6 are a universal serial bus (USB) connector, a video graphics array (VGA) connector, an Ether connector for connecting an Ethernet cable, and the like. The VGA connector supplies a video signal to a display processing unit (display) via a VGA connector cable, for example. The Ether connector for connecting an Ethernet cable is connected to a connector portion provided to an end portion of the Ethernet cable.

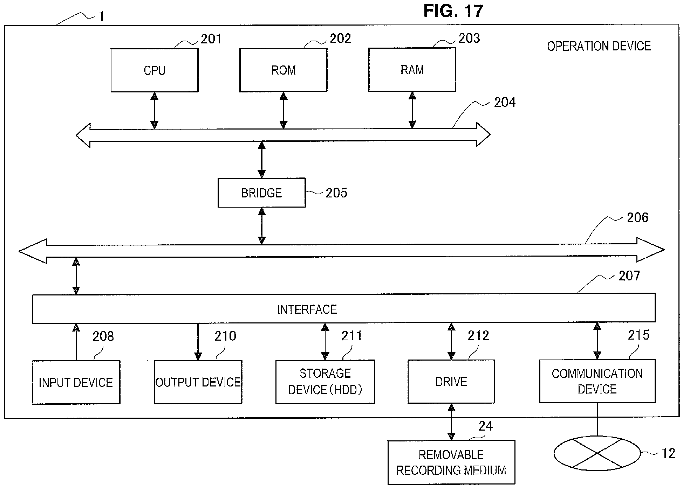

The main body 2 further includes various kinds of hardware such as a central processing unit (CPU) and a storage device. When receiving an input signal from the keyboard unit 4, the external connection terminals 6, or the like, the CPU performs various kinds of processing such as arithmetic processing, control processing, image processing, and output processing of a display unit 8. Note that a detailed hardware configuration of the operation device 1 including the main body 2 will be described below with reference to FIG. 17.

The opening/closing member 3 includes the display unit 8 and is connected to the main body 2 so as to be openable and closable with respect to the top surface of the main body 2 on a rotation axis C positioned in an edge portion on a backside (first side) of the main body 2. Note that the display unit 8 may be a touch panel having both a display function and a operation detection function.

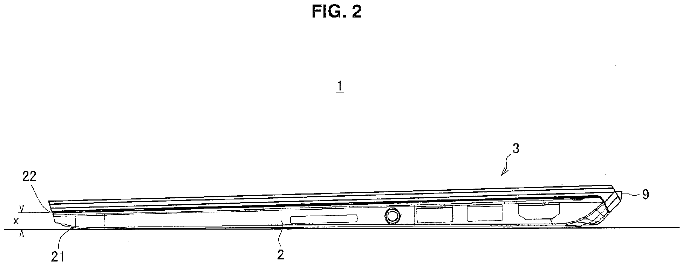

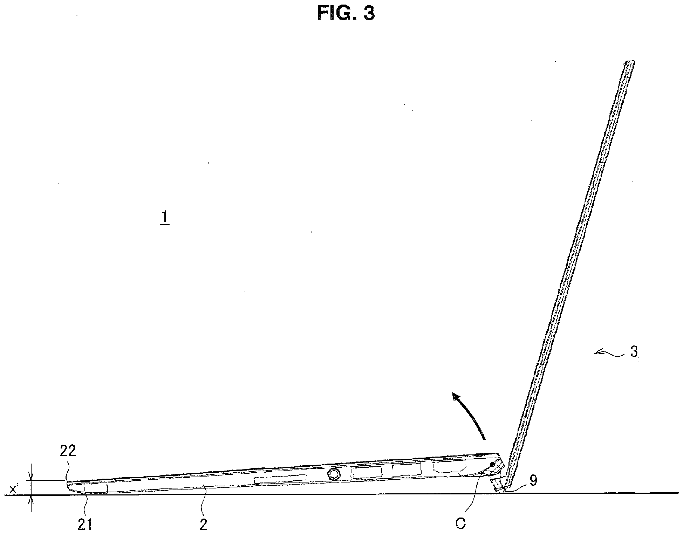

In the above description, a basic external appearance structure of the operation device 1 has been described. Subsequently, with reference to FIG. 2 and FIG. 3, there will be described a closed state in which the opening/closing member 3 is closed and an opened state in which the opening/closing member 3 is opened while comparing those states.

FIG. 2 is a side view illustrating the operation device 1 in the closed state in which the opening/closing member 3 is closed. FIG. 3 is a side view illustrating the operation device 1 in the opened state in which the opening/closing member 3 is opened. As illustrated in FIG. 2, in the operation device 1 according to this embodiment, a bottom surface of the main body 2 is supported to be substantially in parallel to the placement surface in the closed state in which the opening/closing member 3 is closed.

In a case where the opening/closing member 3 is opened, a bending portion 9 provided in the opening/closing member 3 abuts against the placement surface as illustrated in FIG. 3, and therefore the back side (first side) of the main body 2 is pushed up. As a result, the main body 2 is pushed up in such a manner that the main body 2 rotates in an arrow direction on the basis of an edge portion 21 provided on a front side (second side) of the bottom surface. Therefore, a step x' between an edge portion 22 on the front side of the top surface of the main body 2 and the placement surface in the opened state (generally, a usage state in which the opening/closing member 3 is opened at a range of 90° to 135° is assumed.) is smaller than a step x between the edge portion 22 and the placement surface in the closed state.

In a case where the step between the edge portion 22 on the front side of the top surface and the placement surface becomes small as described above, a user can place his/her body parts from elbows to wrists and palms on a position from the placement surface to the palm rests 5 without consciousness of the boundary between the top surface of the main body 2 and the placement surface, and therefore the user uses the operation device more comfortably. Further, the opening/closing member 3 including the display unit 8 abuts against the placement surface, and therefore, even in a case where the display unit 8 has the operation detection function, wobbling of the opening/closing member 3 caused by operation by a user can be suppressed by a friction force between the opening/closing member 3 and the placement surface. Note that, in a case where the opening/closing member 3 is a touch panel as described above, an operator contacts the display unit 8 more often, and shaking generated at that time can be suppressed by applying a predetermined torque to a hinge serving as the bending portion 9. The operation device 1 according to the embodiment of the present disclosure has, in addition to the above structure in which the opening/closing member 3 pushes up the main body 2, many kinds of contrivance for improving usability for a user. Hereinafter, those kinds of contrivance will be sequentially described in detail.

<2. Structure of main body>

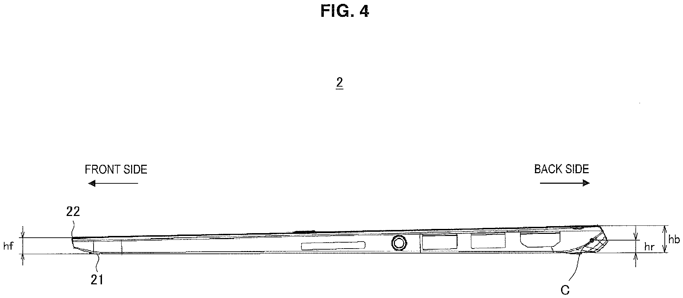

FIG. 4 is a side view illustrating an external appearance of the main body 2. As illustrated in FIG. 4, a thickness of the main body 2 is reduced from the backside toward the front side. Specifically, a thickness hf of the edge portion 22 on the front side of the top surface is thinner than a thickness hb of the edge portion on the back side of the main body 2, and the thickness of the main body 2 is continuously reduced, from the thickness hb to the thickness hf, from the backside to the front side of the main body 2.

Herein, the thickness hf of the edge portion 22 is a distance in a height direction between an extended line of the edge portion 21 on the front side of the bottom surface and the edge portion 22 and is equal to the step x in the closed state illustrated in FIG. 2. Therefore, the step x in the closed state can be reduced by causing the thickness hf on the front side to be thinner than hb on the backside. This makes it possible to further reduce the step x' in the opened state in which the opening/closing member 3 is opened. That is, by tapering the bottom surface on the front side (second side) of the main body 2, the bending portion 9 serves as a point of application of force, and, when the main body 2 is pushed up, the edge portion 21 on the front side of the bottom surface acts as a fulcrum. Therefore, a tip edge portion of the bottom surface on the front side of the main body 2 can be prevented from being brought into contact with the placement surface, and the main body 2 can be easily inclined at a predetermined angle.

As further contrivance, as illustrated in FIG. 4, the edge portion 22 on the front side of the top surface is positioned ahead of the edge portion 21 on the front side of the bottom surface in the main body 2. That is, the tip edge portion on the bottom surface side of the main body 2 is tapered, and therefore the edge portion 21 on the front side of the bottom surface is formed to be in a back position. Herein, the edge portion 21 on the front side of the bottom surface serves as a contact point with the placement surface in a case where the main body 2 is revolved while being pushed up. Therefore, even in a case where an amount of pushing up of the rotation axis C is the same, a rotation angle of the main body 2 becomes larger as a distance between the rotation axis C and the edge portion 21 becomes shorter.

Regarding this point, the edge portion 21 on the front side is formed to be near the back side of the main body 2 as described above, thereby reducing the distance between the edge portion 21 and the rotation axis C. Therefore, the rotation angle of the main body 2 becomes large. As a result, the edge portion 22 on the front side of the top surface becomes closer to the placement surface in the opened state, and therefore the step x' can be further reduced in the opened state.

Note that, according to this embodiment, the top surface of the main body 2 is inclined with respect to the placement surface. Specifically, a total value of an angle of inclination caused by a difference between the thickness hf on the front side and the thickness hb on the back side and the rotation angle caused by rotation of the main body 2 is an angle between the top surface of the main body 2 and the placement surface. Herein, it is known that, in a case where the angle of the top surface of the main body 2 (as a rough guide, a gentle angle of inclination with respect to the placement surface falls within a range that is larger than 0° but less than 15°, preferably falls within a range from about 4° to 10°, and is more preferably 4.5° to 5°) is appropriate, a user does not get tired easily even in long-term use on the basis of ergonomic principles because an operator can place his/her body parts from elbows to wrists on the placement surface and place his/her palms on the palm rests 5 with no step between the palm rests 5 and the placement surface. Thus, according to this embodiment, in a case where the top surface of the main body 2 is desired to have a predetermined angle, it is possible to achieve a desired angle without extremely increasing the thickness hb on the back side or extremely reducing the thickness hf on the front side.

<3. Structure of opening/closing member>

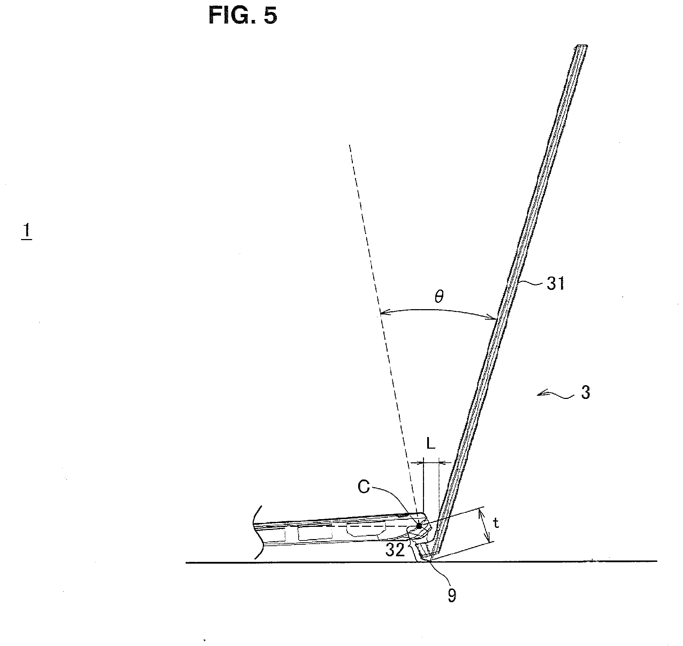

In the above description, with reference to FIG. 4, there has been described the structure of the main body 2. Subsequently, with reference to FIG. 5, there will be described a structure of the opening/closing member 3.

FIG. 5 is a side view illustrating the structure of the opening/closing member 3. As illustrated in FIG. 5, the opening/closing member 3 has the bending portion 9 to abut against the placement surface and a first region 31 and a second region 32 divided by the bending portion 9. The first region 31 is a display region in which the display unit 8 is provided. The second region 32 is bent with respect to the first region 31 and is a connection region connected to the rotation axis C of the main body 2.

A length t between the bending portion 9 and the rotation axis C is longer than the length hr illustrated in FIG. 4 between the bottom surface of the main body 2 and the rotation axis C. With this structure, in a case where the opening/closing member 3 is opened, the bending portion 9 protrudes toward the placement surface over the bottom surface of the main body 2. Therefore, the bending portion 9 abuts against the placement surface, and the main body 2 is pushed up. Note that, as illustrated in FIG. 5, a leg portion made of a rubber material capable of improving a friction force between the placement surface and the bending portion 9 may be interposed between the bending portion 9 and the placement surface.

In the opening/closing member 3 according to this embodiment, it is notable that an angle θ between the first region 31 and the second region 32 is an acute angle. Because the angle θ is an acute angle, various effects described below can be obtained.

First, an amount of lifting of the main body 2 with respect to a same amount of opening of the opening/closing member 3 is larger in a case where the angle θ is an acute angle than in a case where the angle θ is an obtuse angle. As a result, the rotation angle of the main body 2 also becomes large. This makes it possible to further reduce the step x' in the opened state in which the opening/closing member 3 is opened.

Second, in a state in which the opening/closing member 3 is opened, an interval L between the first region 31 and the main body 2 is smaller in a case where the angle θ is an acute angle than in a case where the angle θ is an obtuse angle. As a recent trend in a PC industry, the display unit 8 tends to also have a touch panel function, and therefore reduction in the interval L and reduction in a distance between a user and an object to be operated are effective in terms of an operability for a user in a case where, for example, the user performs touch operation on the display unit 8 while operating the keyboard 4 because a distance between the keyboard unit 4 and the display unit 8 becomes small. Note that the angle θ is set to prevent damage and malfunction of the touch panel caused by bringing a lower edge of the display unit 8 into contact with the back side of the main body 2.

Third, supporting the main body 2 while pushing up the main body 2 can be easier in a case where the angle θ is an acute angle than in a case where the angle θ is an obtuse angle. A force acting as a moment around the bending portion 9 due to a weight of the main body 2 becomes stronger as an angle between a straight line connecting the bending portion 9 and the rotation axis C illustrated in FIG. 5 and the placement surface becomes more horizontal. With this, in a case where the angle between the straight line connecting the bending portion 9 and the rotation axis C and the placement surface becomes more horizontal, the opening/closing member 3 is easily rotated in a direction in which the opening/closing member 3 is closed due to a moment around the rotation axis C. Herein, the angle between the straight line connecting the bending portion 9 and the rotation axis C and the placement surface becomes more vertical in a case where the angle θ is an acute angle than in a case where the angle θ is an obtuse angle. Accordingly, by forming the angle θ as an acute angle, the main body 2 is stably supported with ease while being pushed up.

As described above, because the angle θ between the first region 31 and the second region 32 is an acute angle, various effects can be obtained. Each of the above-described effects is exerted more remarkably by designing the angle θ so that the angle θ is less than 45°. For example, in a case where the angle θ is designed to have 45° and the opening/closing member 3 is opened at 135°, the angle between the straight line connecting the bending portion 9 and the rotation axis C and the placement surface becomes vertical. Therefore, the third effect is exerted more remarkably.

<4. Condition of step>

In the above description, with reference to FIG. 5, there has been described the structure of the opening/closing member 3. Subsequently, there will be described a condition that the step x' between the top surface on the front side of the main body 2 and the placement surface should satisfy in at least one of opened states.

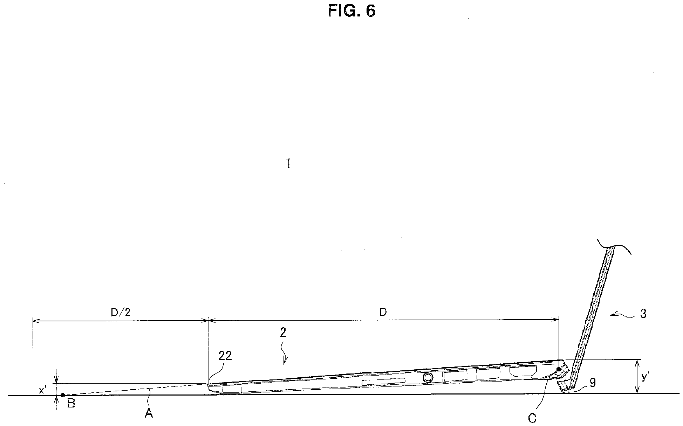

FIG. 6 is a side view illustrating the operation device 1 in the opened state, the operation device 1 being placed on the placement surface. As described above, usability for a user is improved as the step x' between the top surface on the front side of the main body 2 and the placement surface becomes smaller. Specifically, as illustrated in FIG. 6, it is desired that, in a case where a length in a depth direction of the main body 2 is D, a virtual arrival point B where a virtual extended line A of the top surface of the main body 2 and the placement surface intersect each other be positioned within a range of D/2 from the main body 2. This is achieved by setting the step x' in the opened state so that the step x' is 1/3 or less of a height y' of the edge portion on the back side of the top surface, i.e., by satisfying x' ≤ (y'/3).

Note that x' ≤ (y'/3) is achieved by designing the operation device 1 so that the thickness hf of the edge portion 22 on the front side of the main body 2, the length t between the rotation axis C and the bending portion, the length hr between the rotation axis C and the bottom surface of the main body 2, the thickness hb of the edge portion on the back side of the main body 2, and a length E in the depth direction of the bottom surface of the main body 2 satisfy the following formula.

[Math 1]

$$\alpha x \leqq \dfrac{\dfrac{hb}{\alpha} + t - hr}{3}$$

$$\alpha = \dfrac{\sqrt{E^2 - (t - hr)^2}}{E}$$

(Modification example)

In the above description, there has been described the example where the bottom surface in the edge portion on the front side of the main body 2 is formed to be shortened toward the back side of the main body 2. However, the above condition regarding the step x' can be satisfied even in a case where the edge portion on the front side of the main body 2 is provided in other embodiments.

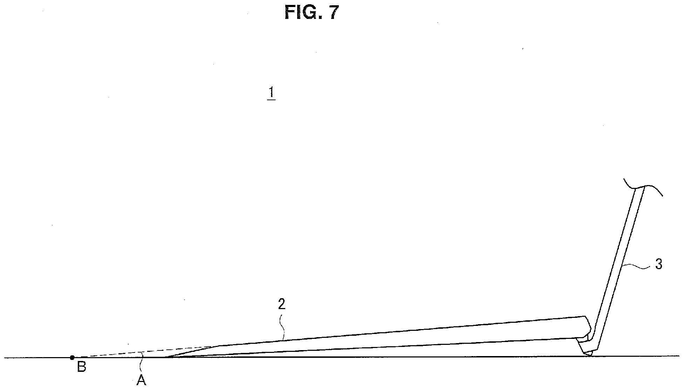

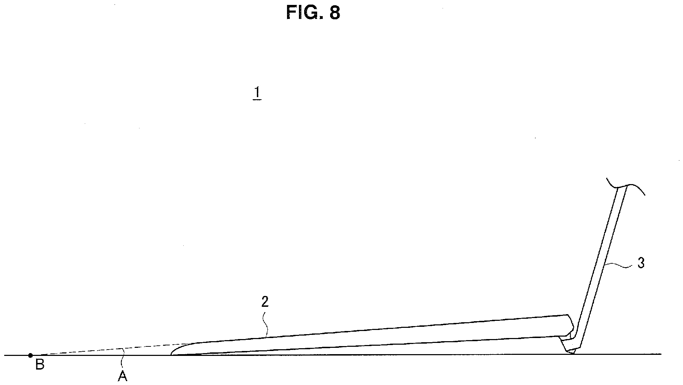

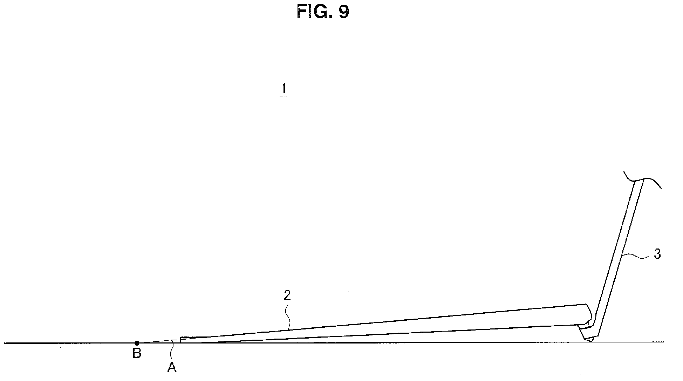

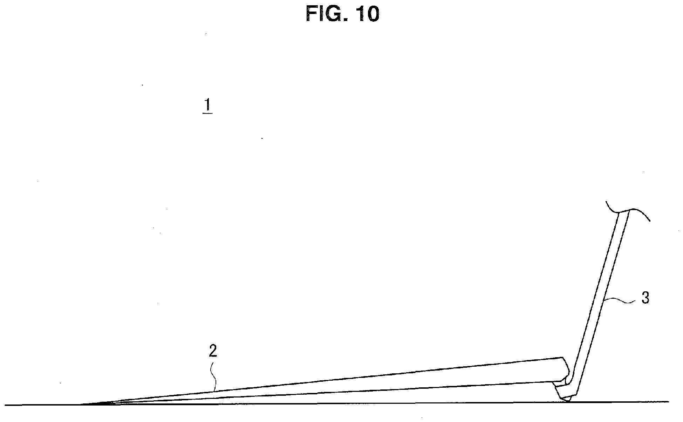

For example, as illustrated in FIG. 7, the edge portion on the front side of the main body 2 may be designed to have a shape in which the bottom surface protrudes with respect to the top surface and the edge portion is straightly bent down from the top surface toward the bottom surface. As illustrated in FIG. 8, the edge portion on the front side of the main body 2 may be designed to have a shape in which the bottom surface protrudes with respect to the top surface and the edge portion is curved from the top surface toward the bottom surface. As illustrated in FIG. 9, the edge portion on the front side of the main body 2 may be designed to have a shape in which the edge portion is straightly or curvilinearly warped upward. As illustrated in FIG. 10, the top surface of the main body 2 may be designed to have a straight line or a curved line without bending.

In the above description, there has been described the example where the virtual arrival point B where the virtual extended line A of the top surface of the main body 2 and the placement surface intersect each other is designed to be positioned within the range of D/2 from the main body 2. However, the virtual arrival point B may be designed to be positioned within a range of a distance D from the main body 2. This is achieved by setting the step x' in the opened state so that the step x' is 1/2 or less of the height y' of the edge portion on the back side of the top surface. Also with this structure, a user can place his/her hands without consciousness of the boundary between the top surface of the main body and the placement surface, and therefore the user uses the operation device more comfortably.

<5. Six views of operation device>

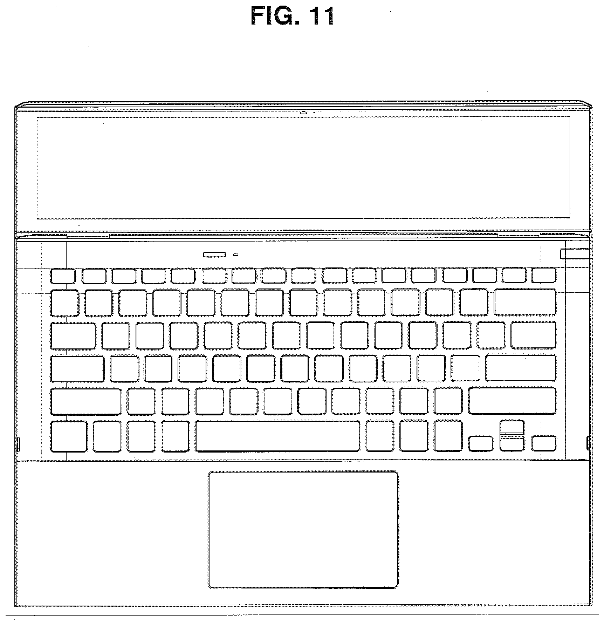

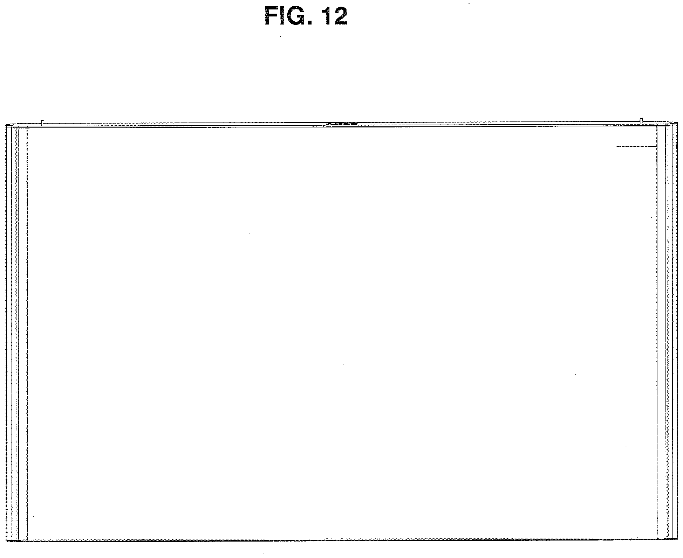

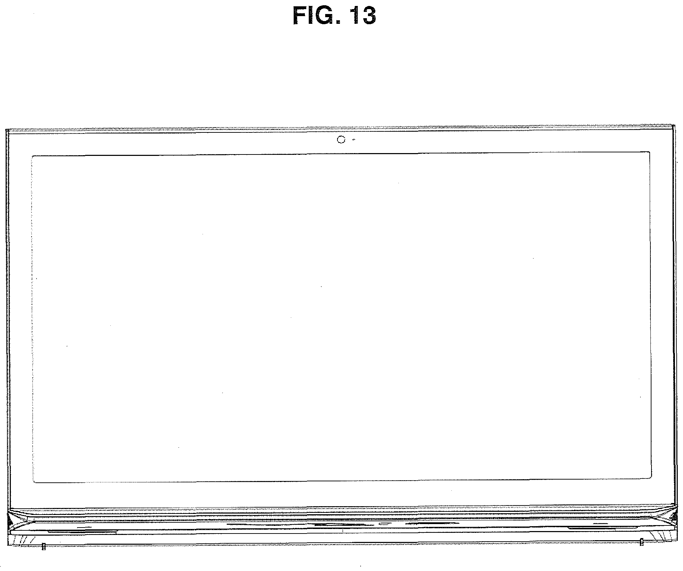

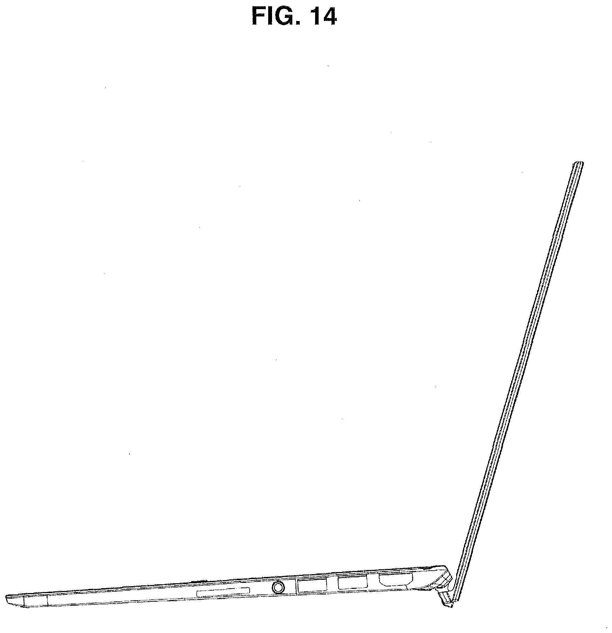

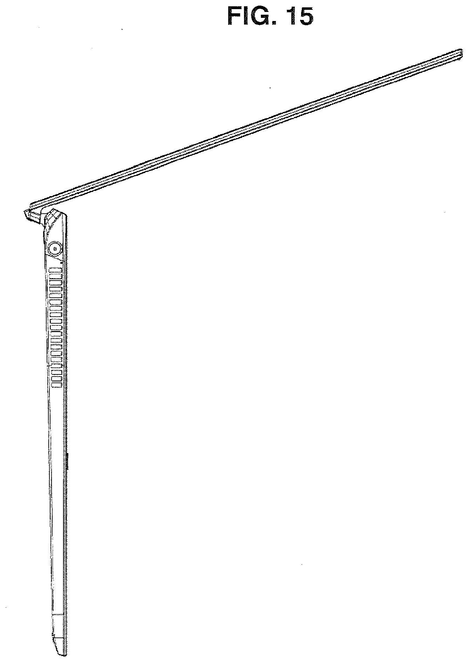

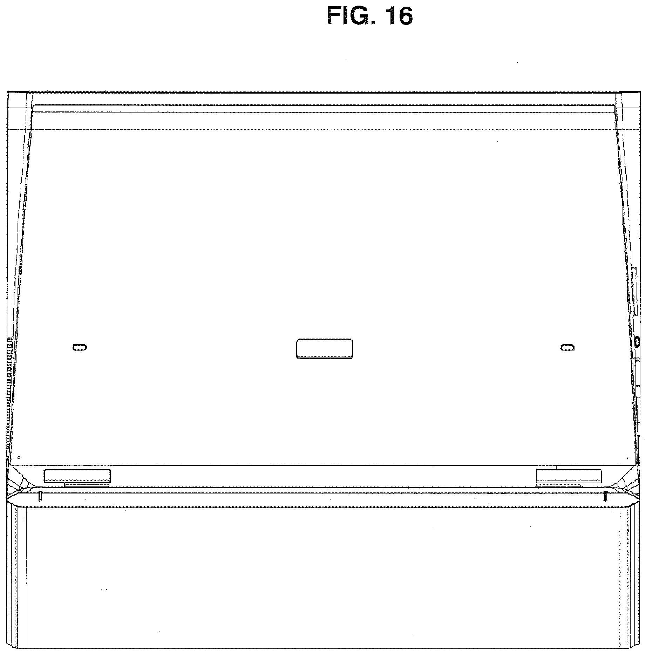

In the above description, there has been described the structure of the operation device 1 according to this embodiment. Herein, the six views of the operation device 1 are attached as FIG. 11 to FIG. 16. FIG. 11 is a planar view of the operation device 1 in the opened state. FIG. 12 is a rear view of the operation device 1 in the opened state. FIG. 13 is a front view of the operation device 1 in the opened state. FIG. 14 is a right side view of the operation device 1 in the opened state. FIG. 15 is a left side view of the operation device 1 in the opened state. FIG. 16 is a bottom view of the operation device 1 in the opened state. With reference to the six views of the operation device 1 illustrated in FIG. 11 to FIG. 16, the external appearance structure of the operation device 1 is understood in more detail.

<6. Hardware configuration>

With reference to FIG. 17, there will be described a hardware configuration of the operation device 1 according to this embodiment. Information processing with the operation device 1 is achieved by cooperation of the hardware configuration described below and software.

FIG. 17 is a block diagram illustrating the hardware configuration of the operation device 1. The operation device 1 includes a central processing unit (CPU) 201, a read only memory (ROM) 202, a random access memory (RAM) 203, and a host bus 204. The operation device 1 also includes a bridge 205, an external bus 206, an interface 207, an input device 208, an output device 210, a storage device (HDD) 211, a drive 212, and a communication device 215.

The CPU 201 functions as an arithmetic processing device and a control device and controls whole operation in the operation device 1 in accordance with various programs. The CPU 201 may be a microprocessor. The ROM 202 stores programs, arithmetic parameters, and the like used by the CPU 201. The RAM 203 temporarily stores programs used in execution of the CPU 201, parameters that are appropriately changed in the execution, and the like. Those are connected to one another by the host bus 204 including a CPU bus.

The host bus 204 is connected to the external bus 206 such as a peripheral component interconnect/interface (PCI) bus via the bridge 205. Note that it is not always necessary to separately provide the host bus 204, the bridge 205, and the external bus 206, and a single bus may have those functions.

The input device 208 includes, for example, input means with which a user inputs information, such as a mouse, a keyboard unit, a touch panel, a button, a microphone, a switch, and a lever, and an input control circuit that generates an input signal on the basis of input by a user and outputs the input signal to the CPU 201. A user of the operation device 1 can input various kinds of data to the operation device 1 and instructs the operation device 1 to perform processing operation by operating the input device 208. Note that the input device 208 corresponds to the keyboard unit 4 illustrated in, for example, FIG. 1.

The output device 210 includes, for example, a display device such as a cathode ray tube (CRT) display device, a liquid crystal display (LCD) device, an organic light emitting diode (OLED) device, and a lamp. The output device 210 further includes an audio output device such as a speaker and a headphone. The output device 210 outputs, for example, reproduced contents. Specifically, the display device displays various kinds of information such as reproduced video data in the form of text or image. Meanwhile, the audio output device converts reproduced audio data or the like into audio and outputs the audio.

The storage device 211 is a device for storing data and is configured as an example of a storage unit of the operation device 1 according to this embodiment. The storage device 211 may include a storage medium, a recording device that records data in the storage medium, a reading-out device that reads out the data from the storage medium, a deleting device that deletes the data recorded in the storage medium, and the like. The storage device 211 includes, for example, a hard disk drive (HDD). The storage device 211 drives a hard disk and stores programs executed by the CPU 201 and various kinds of data.

The drive 212 is a reader/writer for the storage medium and is included in or is externally attached to the operation device 1. The drive 212 reads out information recorded in an attached removable storage medium 24 such as a magnetic disk, an optical disk, an optical magnetic disk, or a semiconductor memory and outputs the information to the RAM 203. The drive 212 can also write information to the removable storage medium 24.

The communication device 215 is, for example, a communication interface including a communication device to be connected to a communication network 12. The communication device 215 may be a communication device compatible with a wireless local area network (LAN), a communication device compatible with a long term evolution (LTE), or a wired communication device that performs communication with a wire.

<7. Setting of torque>

In the above description, there has been described the hardware configuration of the operation device 1 according to this embodiment. In the embodiment described above, the display unit 8 has at least the display function, but is not particularly limited in terms of whether or not the display unit 8 has the operation detection function. In this section, a case where the display unit 8 is a touch panel having both the display function and the operation detection function will be further discussed. Note that the operation device 1 described in this section and sections following this section may have a part or all of the configuration of the operation device 1 described above or may not have the configuration.

When considering a case where the display unit 8 is a touch panel having both the display function and the operation detection function, touch operation may be performed on the display unit 8 by a user in a state in which the opening/closing member 3 is opened. At this time, in a case where the opening/closing member 3 is rotated with respect to the main body 2 during the touch operation, the user cannot easily perform the touch operation. In view of this, it is desired that, in a case where the opening/closing member 3 is pressed in a state in which the opening/closing member 3 is opened, the opening/closing member 3 be not rotated with respect to the main body 2. Meanwhile, the opening/closing member 3 may be opened by a user in a state in which the opening/closing member 3 is not opened. In view of this, it is desired that, in a case where the opening/closing member 3 is pressed in a state in which the opening/closing member 3 is not opened, the opening/closing member 3 be rotated with respect to the main body 2.

In order to achieve such operation, in the following description, there is proposed a technology in which, in a state in which the opening/closing member 3 is opened and in a state in which the opening/closing member 3 is not opened, a possibility of rotating the opening/closing member 3 with respect to the main body 2 is changed in a case where the opening/closing member 3 is pressed. Specifically, there is proposed the operation device 1 in which torque of a hinge portion (hereinafter, also simply referred to as "torque") that connects the opening/closing member 3 and the main body 2 is different between a state in which the opening/closing member 3 is opened and a state in which the opening/closing member 3 is not opened.

Note that, as described above, generally, the operation device 1 is used by a user in a state in which the angle between the placement surface and the opening/closing member 3 is 90° to 135°. Therefore, in the following description, a state in which the opening/closing member 3 is opened means a state in which the opening/closing member 3 is opened at 90° to 135° with respect to the placement surface. Further, a state in which the opening/closing member 3 is not opened means a state in which the opening/closing member 3 is opened at less than 90° with respect to the placement surface. However, specific ranges of angles of the opening/closing member 3 in a state in which the opening/closing member 3 is opened and in a state in which the opening/closing member 3 is not opened are not particularly limited.

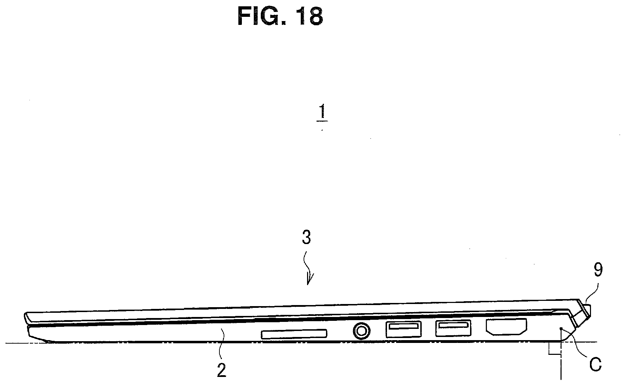

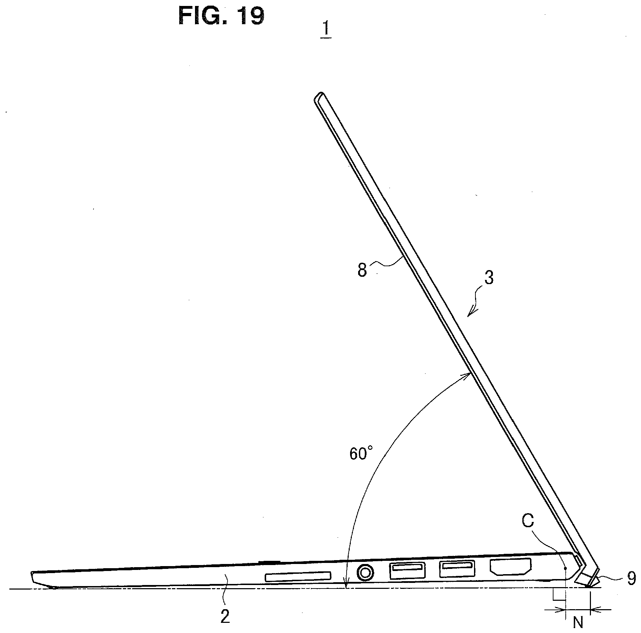

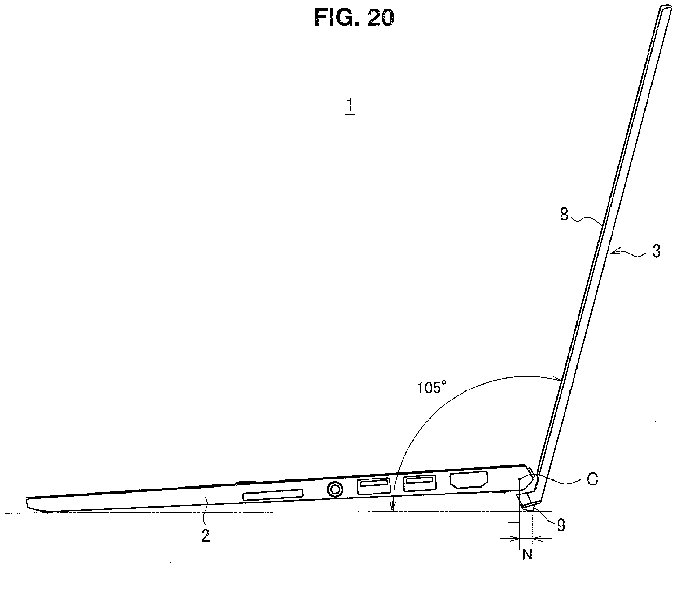

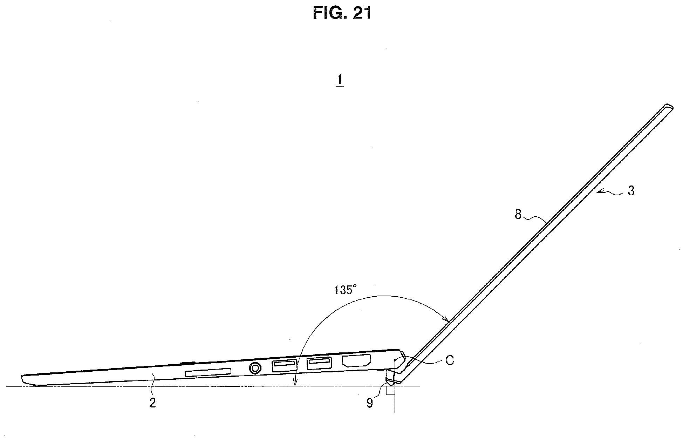

This will be specifically described with reference to drawings. FIG. 18 is a side view illustrating the operation device 1 in a state in which the opening/closing member 3 is closed. FIG. 19 is a side view illustrating the operation device 1 in a case where the angle between the opening/closing member 3 and the placement surface is 60°. FIG. 20 is a side view illustrating the operation device 1 in a case where the angle between the opening/closing member 3 and the placement surface is 105°. FIG. 21 is a side view illustrating the operation device 1 in a case where the angle between the opening/closing member 3 and the placement surface is 135°.

Herein, assuming that a user opens the opening/closing member 3 in a state in which the opening/closing member 3 is closed as illustrated in FIG. 18, at least a part of the opening/closing member 3 and the placement surface abut against each other when the opening/closing member 3 is opened to a certain degree, and thus the main body 2 is pushed up. An angle at which the at least a part of the opening/closing member 3 and the placement surface start to abut against each other is not particularly limited. For example, as illustrated in FIG. 19, the angle may be 60°. Note that, as illustrated in FIG. 19, a distance between a foot of a perpendicular line drawn from the rotation axis C to the placement surface and an abutting position is denoted by N.

When the user further opens the opening/closing member 3 and the opening/closing member 3 is opened to a certain degree, the bending portion 9 and the placement surface abut against each other. Against which position in the placement surface the bending portion 9 abuts is not particularly limited. However, the bending portion 9 preferably abuts against the placement surface on a back side of the foot of the perpendicular line drawn from the rotation axis C to the placement surface. In a case where the bending portion 9 abuts in such a position, a force that prevents rotation of the opening/closing member 3 acts. This makes it possible to suppress wobbling of the opening/closing member 3 caused by contact with the display unit 8. In an example illustrated in FIG. 20, the bending portion 9 abuts against the placement surface on the back side of the foot of the perpendicular line drawn from the rotation axis C to the placement surface.

When the user further opens the opening/closing member 3 and the opening/closing member is opened to a certain degree, the distance N between the foot of the perpendicular line drawn from the rotation axis C to the placement surface and the abutting position becomes zero. To which degree the opening/closing member is opened to cause the distance N to be zero is not particularly limited. FIG. 21 illustrates an example where the distance N becomes zero in a case where the angle between the placement surface and the opening/closing member 3 is 135°.

Herein, as described above, in a case where a boundary indicating whether or not the opening/closing member 3 is opened is 90°, states illustrated in FIG. 18 and FIG. 19 can correspond to a state in which the opening/closing member 3 is not opened, and states illustrated in FIG. 20 and FIG. 21 can correspond to a state in which the opening/closing member 3 is opened. That is, the torque only needs to be different between the states illustrated in FIG. 18 and FIG. 19 and the states illustrated in FIG. 20 and FIG. 21. Hereinafter, setting of the torque will be described in more detail.

In a case where a user touches the display unit 8 in a state in which the opening/closing member 3 is opened, both the main body 2 and the opening/closing member 3 stand still during a period in which a press to the opening/closing member 3 by touching is small. However, in a case where a press to the opening/closing member 3 by touching is increased, there is a possibility that the opening/closing member 3 is rotated with respect to the main body 2 or both the main body 2 and the opening/closing member 3 are rotated. However, as described above, it is desired that, even in a case where a press to the opening/closing member 3 by touching is increased, the opening/closing member 3 be designed not to be rotated with respect to the main body 2.

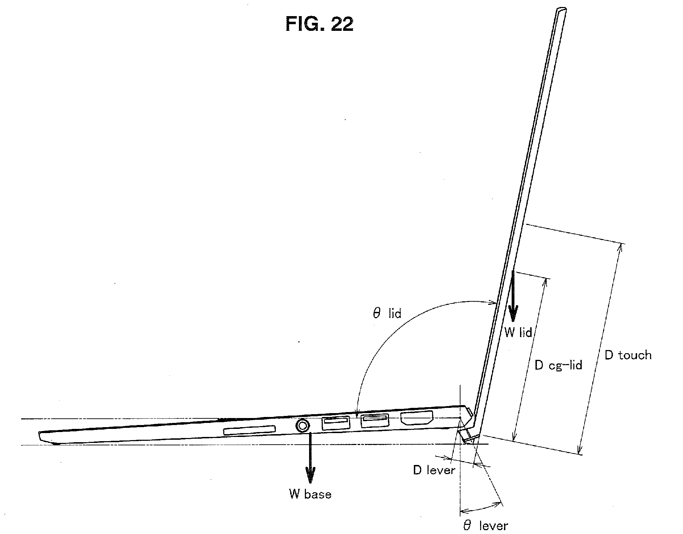

FIG. 22 is a view for explaining an upper limit value F of a magnitude of a force applied to the opening/closing member 3 to satisfy a condition in which the opening/closing member 3 is not rotated with respect to the main body 2. Properties of respective parameters illustrated in FIG. 22 will be described below. Note that an example illustrated in FIG. 22 is assumed to be a case where the operation device 1 is placed on the placement surface in a state in which the opening/closing member 3 is opened, and the bending portion 9 abuts against the placement surface.

W base: a magnitude of gravity applied to the main body 2
W lid: a magnitude of gravity applied to the opening/closing member 3
D touch: a distance between the rotation axis C and a touch position
D cg-lid: a distance between the rotation axis C and a center of gravity of the opening/closing member 3
θ lid: a magnitude of the angle between the opening/closing member 3 and the placement surface
D lever: a distance between the rotation axis C and the bending portion 9

θ lever: a rotation angle of the bending portion 9 from a vertical direction

An example of specific formulae for calculating the upper limit value F will be shown as the following formula (1) to formula (3).

$$F = \{(T \text{ hinge} \times 2) - T \text{ lid} + T \text{ base}\}/$$
$$D \text{ touch} \times 1000 \qquad [gf] \ldots \text{formula (1)}$$

$$T \text{ lid} = W \text{ lid} \times D \text{ cg - lid} \times \sin(\theta \text{ lid} - 90)$$
$$[Kgf\text{-}cm] \ldots \text{formula (2)}$$

$$T \text{ base} = W \text{ base}/2 \times D \text{ lever} \times \sin(\theta \text{ lever})$$
$$[Kgf\text{-}cm] \ldots \text{formula (3)}$$

It is considered that, by setting the torque so that the torque satisfies a condition in which a measured value of a magnitude of a force applied to the opening/closing member 3 by touching is smaller than the upper limit value F calculated as described above as a theoretical value, rotation of the opening/closing member 3 with respect to the main body 2 can be prevented even in a case where a press to the opening/closing member 3 by touching is increased.

Further, a force for preventing the front side of the main body 2 from being lifted by abutting of the bending portion 9 and the placement surface is applied. However, it is considered that, in a case where the magnitude of the force applied to the opening/closing member 3 by touching exceeds a limit value, the front side of the main body 2 is lifted. Therefore, it is considered that, by setting the torque so that the torque satisfies a condition in which the measured value of the magnitude of the force applied to the opening/closing member 3 by touching is smaller than this limit value, the front side of the main body 2 can be prevented from being lifted even in a case where a press to the opening/closing member 3 by touching is increased.

There will be described a specific example regarding how to change the torque. As described above, the torque is desirably different between a state in which the opening/closing member 3 is opened and a state in which the opening/closing member 3 is not opened. Specifically, in a state in which the opening/closing member 3 is not opened, the torque needs to be uniform after the angle between the opening/closing member 3 and the placement surface exceeds a predetermined angle, and, in a state in which the opening/closing member 3 is opened, the torque needs to be increased in a case where the angle between the opening/closing member 3 and the placement surface is in a predetermined section.

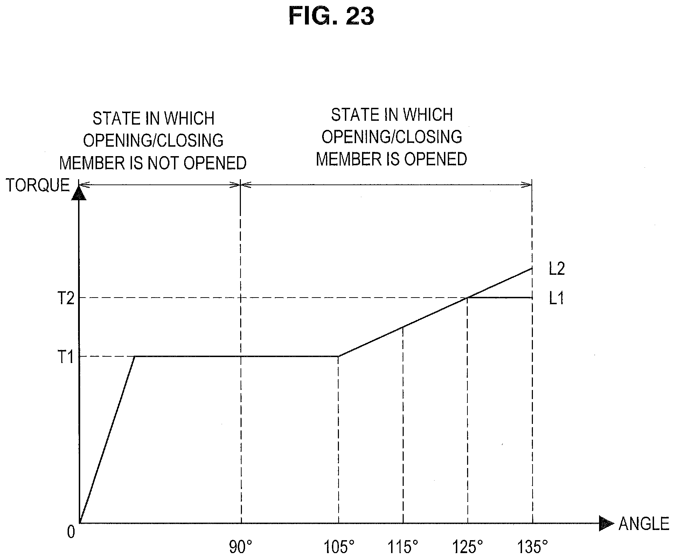

FIG. 23 is a view illustrating a first example of a relationship between an angle between the placement surface and the opening/closing member 3 and torque. Note that a magnitude of the torque illustrated herein indicates a magnitude of torque generated by the hinge that connects the main body 2 and the opening/closing member 3. In the example illustrated in FIG. 23, in a state in which the opening/closing member 3 is not opened, the torque becomes T1 after the angle between the opening/closing member 3 and the placement surface exceeds the predetermined angle, and, in a state in which the opening/closing member 3 is opened, the torque is increased to T2 (lines L1, L2) in a case where the angle between the opening/closing member 3 and the placement surface is from 105° to 125°. Regarding the line L2, the torque is increased also in a case where the angle between the opening/closing member 3 and the placement surface is from 125° to 135°.

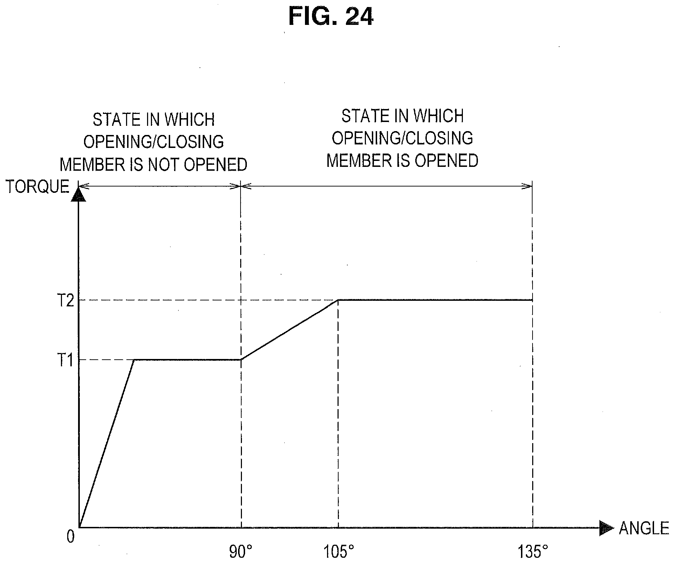

FIG. 24 is a view illustrating a second example of a relationship between an angle between the placement surface and the opening/closing member 3 and torque. Note that a magnitude of the torque illustrated herein indicates a magnitude of torque generated by the hinge that connects the main body 2 and the opening/closing member 3. In the example illustrated in FIG. 24, in a state in which the opening/closing member 3 is not opened, the torque becomes T1 after the angle between the opening/closing member 3 and the placement surface exceeds the predetermined angle, and, in a state in which the opening/closing member 3 is opened, the torque is increased to T2 in a case where the angle between the opening/closing member 3 and the placement surface is from 90° to 105°.

As described above, there have been described the examples of the relationship between the angle between the placement surface and the opening/closing member 3 and the torque. However, the predetermined angle is not particularly limited. In the examples illustrated in FIG. 23 and FIG. 24, the torque is not uniform in a section before the angle between the placement surface and the opening/closing member 3 reaches the predetermined angle in a state in which the opening/closing member 3 is not opened. This is because it is considered that this section corresponds to a section (play section) that does not particularly influence operation of the operation device 1, but such section does not need to be considered in particular.

A start angle in a predetermined section in which the torque is increased is desirably an angle around 105°.

This is because, in a case where a user uses the operation device 1, the opening/closing member 3 is generally opened until the angle between the placement surface and the opening/closing member 3 reaches an angle around 105°. Specifically, the start angle in the predetermined section is desirably an angle falling within a range of 90° to 110°. Note that, in the example illustrated in FIG. 23, the start angle in the predetermined section is 105°, and, in the example illustrated in FIG. 24, the start angle in the predetermined section is 90°.

It is desired that the torque in the predetermined section be linearly increased as illustrated in FIG. 23 and FIG. 24. However, the torque in the predetermined section does not always need to be linearly increased. However, as described above, the distance N between the foot of the perpendicular line drawn from the rotation axis C to the placement surface and the abutting position is gradually reduced as the angle between the opening/closing member 3 and the placement surface is increased, and therefore it is considered that wobbling of the opening/closing member 3 caused by contact with the display unit 8 occurs more easily. In view of this, it is desirable that the torque be gradually increased in consideration of complement of tendency of wobbling.

A ratio of the torque T2 to the torque T1 is not particularly limited, but the ratio may be from 1.05 times to 1.3 times. More desirably, the ratio of the torque T2 to the torque T1 is desirably about 1.2 times.

Further, as illustrated in FIG. 24, it is desired that a section in which the torque is uniform be provided to be subsequent to the predetermined section. For example, regarding the line L1 of FIG. 23, the torque is uniform in a section from 125° to 135°, and, in the example illustrated in FIG. 24, the torque is uniform in the section from 105° to 135°. However, in a case where the section subsequent to the predetermined section is small (e.g., a case where the section subsequent to the predetermined section is smaller than 20°), the section in which the torque is uniform does not need to be provided to be subsequent to the predetermined section, as indicated by the line L2 of FIG. 23.

<8. Use of magnets>

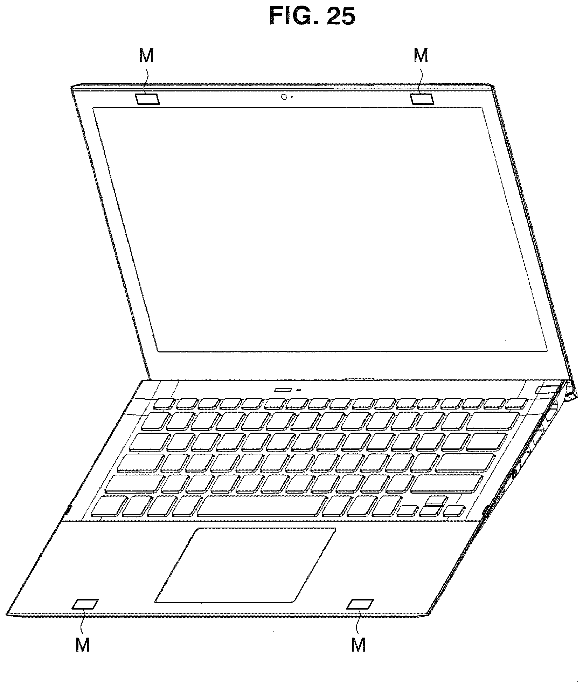

In the above description, there has been the specific example regarding how to change the torque. Subsequently, there will be descrbied a structure that can be further added to the operation device 1. FIG. 25 is a view illustrating an example where magnets M are added to the operation device 1. As illustrated in FIG. 25, the magnets M are desirably added in positions corresponding to the opening/closing member 3 and the main body 2. With this, the main body 2 can retain the opening/closing member 3 more securely in a state in which the operation device 1 is not used. Further, the opening/closing member 3 can be smoothly opened and closed.

In the example illustrated in FIG. 25, two paris (four in total) of the magnets M are added to the operation device 1. However, at least a pair (two in total) of the magnets M needs to be added to the operation device 1. In the example illustrated in FIG. 25, the magnets M are attached to outside of the operation device 1, but the magnets M may be incorporated into inside of the operation device 1.

<9. Conclusion>

As described above, according to the embodiment of the present disclosure, the thickness of the main body 2 is reduced from the back side toward the front side, and, when the opening/closing member 3 is opened, the main body 2 is pushed up by causing the bending portion 9 of the opening/closing member and the placement surface to abut against each other. As a result, the step x' between the edge portion 22 on the front side of the top surface of the main body 2 and the placement surface can be reduced. With this structure, a user can place his/her hands without consciousness of the boundary between the top surface of the main body and the placement surface, and therefore the user can use the operation device 1 while he/she feels that the palm rests 5 are infinitely continue.

The angle θ between the first region 31 and the second region 32 of the opening/closing member 3 is an acute angle, and therefore it is possible to increase the amount of lifting of the main body 2, reduce the interval L between the first region 31 and the main body 2, and easily support the main body 2 while pushing up the main body 2.

The preferred embodiments of the present disclosure have been described above with reference to the accompanying drawings, whilst the present disclosure is not limited to the above examples, of course. A person skilled in the art may find various alterations and modifications within the scope of the appended claims, and it should be understood that they will naturally come under the technical scope of the present disclosure.

Reference Signs List

    1 operation device
    2 main body
    3 opening/closing member

4 keyboard unit
5 palm rest
6 external connection terminal
8 display unit
9 bending portion
21 edge portion on front side of bottom surface
22 edge portion on front side of top surface
31 first region
32 second region

**Claims**

1. An operation device (1) comprising:

   a main body (2) that has a top surface on which an operation unit (4) is provided; and
   an opening/closing member (3) that is provided to be openable and closable with respect to the top surface of the main body (2), around a rotation axis (C) positioned in an edge portion of a back side of the main body (2), the opening/closing member (3) including a display unit (8),
   wherein,
   when the opening/closing member (3) is opened, the main body (2) is pushed up by abutment of at least a part of the opening/closing member (3) and a placement surface, **characterised in that**:

   a thickness of the main body (2) is continuously reduced from the back side toward a front side opposite to the back side,
   wherein the opening/closing member (3) has a bending portion (9) and a first region (31) and a second region (32) that are divided by the bending portion (9), and
   wherein the bending portion (9) abuts against the placement surface, and
   wherein the first region (31) and the second region (32) of the opening/closing member (3) form an acute angle ($\theta$),
   wherein the first region (31) is a display region in which the display unit (8) is provided and the second region (32) is a connection region connected to the rotation axis (C).

2. The operation device (1) according to claim 1,
   wherein a length (t) between the rotation axis (C) and the bending portion (9) is larger than a length (hr) between the rotation axis (C) and a bottom surface of the main body (2).

3. The operation device (1) according to claim 1 or 2,
   wherein an angle ($\theta$) between the first region (31) and the second region (32) is 45° or less.

4. The operation device (1) according to any one of claims 1 to 3,
   wherein an edge portion (22) of the front side of the top surface protrudes more than an edge portion (21) of the front side of a bottom surface of the main body (2).

5. The operation device (1) according to any one of claims 1 to 4,
   wherein, in a state in which the opening/closing member (3) is opened, a height (x') between an edge portion of the front side of the top surface and the placement surface is 1/3 or less of a height (y') between the edge portion on the back side of the top surface and the placement surface.

6. The operation device (1) according to any one of claims 1 to 4,
   wherein, in a state in which the opening/closing member (3) is opened, a distance between a point (B) where an extended line (A) of inclination of the top surface and the placement surface intersect each other and the main body (2) is smaller than half of a length (D) between the edge portion of the back side and an edge portion (22) of the front side of the main body (2).

7. The operation device (1) according to any one of claims 1 to 6,
   wherein torque of a hinge portion that connects the opening/closing member (3) and the main body (2) is different between a state in which the opening/closing member (3) is opened and a state in which the opening/closing member

(3) is not opened.

8. The operation device (1) according to claim 7,
wherein, in a state in which the opening/closing member (3) is not opened, the torque becomes uniform after an angle (θlid) between the opening/closing member (3) and the placement surface exceeds a predetermined angle, and, in a state in which the opening/closing member (3) is opened, the torque is increased in a case where the angle (θlid) between the opening/closing member (3) and the placement surface is in a predetermined section.

9. The operation device (1) according to claim 8,
wherein a start angle of the predetermined section is an angle around 105°.

10. The operation device (1) according to claim 9,
wherein the start angle of the predetermined section is an angle within a range of 90° to 110°.

11. The operation device (1) according to any one of claims 1 to 10,
Wherein, in a case where the opening/closing member (3) is pressed in a state in which the main body (2) is placed on the placement surface, the opening/closing member (3) is not rotated with respect to the main body (2) in a state in which the opening/closing member (3) is opened, and the opening/closing member (3) is rotated with respect to the main body (2) in a state in which the opening/closing member (3) is not opened.

12. The operation device (1) according to any one of claims 1 to 11,
wherein the opening/closing member (3) has a bending portion (9) to abut against the placement surface, and wherein, when the opening/closing member (3) is opened, the bending portion (9) abuts against the placement surface on a back side of a foot of a perpendicular line drawn from the rotation axis (C) to the placement surface.


**Patentansprüche**

1. Bedienungsvorrichtung (1), die Folgendes umfasst:

   einen Hauptkörper (2), der eine obere Fläche besitzt, auf der eine Bedienungseinheit (4) vorgesehen ist; und ein Öffnungs-/Schließelement (3), das so vorgesehen ist, dass es in Bezug auf die obere Fläche des Hauptkörpers (2) um eine Drehachse (C), die in einem Randabschnitt einer Rückseite des Hauptkörpers (2) positioniert ist, geöffnet und geschlossen werden kann, wobei das Öffnungs-/Schließelement (3) eine Anzeigeeinheit (8) enthält,
   wobei
   dann, wenn das Öffnungs-/Schließelement (3) geöffnet wird, der Hauptkörper durch Anstoßen zumindest eines Teils des Öffnungs-/Schließelements (3) und einer Positionierungsfläche nach oben gedrückt wird, **dadurch gekennzeichnet, dass**:

   eine Dicke des Hauptkörpers (2) von der Rückseite in Richtung einer Vorderseite gegenüber der Rückseite kontinuierlich abnimmt,
   wobei das Öffnungs-/Schließelement (3) einen Biegeabschnitt (9) und einen ersten Bereich (31) und einen zweiten Bereich (32), die durch den Biegeabschnitt (9) unterteilt sind, besitzt und
   wobei der Biegeabschnitt (9) an der Positionierungsfläche anliegt und
   wobei der erste Bereich (31) und der zweite Bereich (32) des Öffnungs-/Schließelements (3) einen spitzen Winkel (θ) bilden,
   wobei der erste Bereich (31) ein Anzeigebereich ist, in dem die Anzeigeeinheit (8) vorgesehen ist, und der zweite Bereich (32) ein Verbindungsbereich ist, der mit der Drehachse (C) verbunden ist.

2. Bedienungsvorrichtung nach Anspruch 1,
wobei eine Strecke (t) zwischen der Drehachse (C) und dem Biegeabschnitt (9) größer als eine Strecke (hr) zwischen der Drehachse (C) und einer unteren Fläche des Hauptkörpers (2) ist.

3. Bedienungsvorrichtung (1) nach Anspruch 1 oder 2,
wobei ein Winkel (θ) zwischen dem ersten Bereich (31) und dem zweiten Bereich (32) 45° oder weniger beträgt.

4. Bedienungsvorrichtung nach einem der Ansprüche 1 bis 3,

wobei ein Randabschnitt (22) der Vorderseite der oberen Fläche mehr als ein Randabschnitt (21) der Vorderseite einer unteren Fläche des Hauptkörpers (2) vorsteht.

5. Bedienungsvorrichtung (1) nach einem der Ansprüche 1 bis 4,
wobei in einem Zustand, in dem das Öffnungs-/Schließelement (3) geöffnet ist, eine Höhe (x') zwischen einem Randabschnitt der Vorderseite der oberen Fläche und der Positionierungsfläche 1/3 oder weniger einer Höhe (y') zwischen dem Randabschnitt auf der Rückseite der oberen Fläche und der Positionierungsfläche beträgt.

6. Bedienungsvorrichtung (1) nach einem der Ansprüche 1 bis 4,
wobei in einem Zustand, in dem das Öffnungs-/Schließelement (3) geöffnet ist, ein Abstand zwischen einem Punkt (B), wo eine verlängerte Linie (A) einer Neigung der oberen Fläche und der Positionierungsfläche einander schneiden, und dem Hauptkörper (2) kleiner als ein halbe Strecke (D) zwischen dem Randabschnitt der Rückseite und einem Randabschnitt (22) der Vorderseite des Hauptkörpers (2) ist.

7. Bedienungsvorrichtung (1) nach einem der Ansprüche 1 bis 6,
wobei ein Drehmoment eines Gelenkteils, das das Öffnungs-/Schließelement (3) und den Hauptkörper (2) verbindet, zwischen einem Zustand, in dem das Öffnungs-/Schließelement (3) geöffnet ist, und einem Zustand, in dem das Öffnungs-/Schließelement (3) nicht geöffnet ist, verschieden ist.

8. Bedienungsvorrichtung (1) nach Anspruch 7,
wobei in einem Zustand, in dem das Öffnungs-/Schließelement (3) nicht geöffnet ist, das Drehmoment einheitlich wird, nachdem ein Winkel ($\theta$lid) zwischen dem Öffnungs-/Schließelement (3) und der Positionierungsfläche einen vorbestimmten Winkel überschreitet, und in einem Zustand, in dem das Öffnungs-/Schließelement (3) geöffnet ist, das Drehmoment in einem Fall, in dem der Winkel ($\theta$lid) zwischen dem Öffnungs-/Schließelement (3) und der Positionierungsfläche in einem vorbestimmten Abschnitt ist, erhöht wird.

9. Bedienungsvorrichtung (1) nach Anspruch 8,
wobei ein Startwinkel des vorbestimmten Abschnitts ein Winkel um 105° ist.

10. Bedienungsvorrichtung (1) nach Anspruch 9,
wobei ein Startwinkel des vorbestimmten Abschnitts ein Winkel innerhalb eines Bereichs von 90° bis 110° ist.

11. Bedienungsvorrichtung (1) nach einem der Ansprüche 1 bis 10,
wobei in einem Fall, in dem das Öffnungs-/Schließelement (3) in einen Zustand gedrückt wird, in dem der Hauptkörper (2) auf der Positionierungsfläche positioniert ist, das Öffnungs-/Schließelement (3) in einem Zustand, in dem das Öffnungs-/Schließelement (3) geöffnet ist, nicht in Bezug auf den Hauptkörper (2) gedreht wird und das Öffnungs-/Schließelement (3) in einem Zustand, in dem das Öffnungs-/Schließelement (3) nicht geöffnet ist, in Bezug auf den Hauptkörper (2) gedreht wird.

12. Bedienungsvorrichtung (1) nach einem der Ansprüche 1 bis 11,
wobei das Öffnungs-/Schließelement (3) einen Biegeabschnitt (9) besitzt, um gegen die Positionierungsfläche anzustoßen, und
wobei dann, wenn das Öffnungs-/Schließelement (3) geöffnet ist, der Biegeabschnitt (9) gegen die Positionierungsfläche auf einer Rückseite einer Basis einer senkrechten Linie, die von der Drehachse (C) zu der Positionierungsfläche gezogen wird, anstößt.

**Revendications**

1. Dispositif fonctionnel (1) comprenant :

un corps principal (2) qui a une surface supérieure sur laquelle une unité fonctionnelle (4) est située ; et
un élément d'ouverture/fermeture (3) qui est conçu de manière à pouvoir être ouvert et fermé par rapport à la surface supérieure du corps principal (2), autour d'un axe de rotation (C) positionné dans une partie bord d'un côté arrière du corps principal (2), l'élément d'ouverture/fermeture (3) incluant une unité d'affichage (8),
quand l'élément d'ouverture/fermeture (3) est ouvert, le corps principal (2) est poussé par appui d'au moins une partie de l'élément d'ouverture/fermeture (3) et d'une surface de placement,
le dispositif fonctionnel étant **caractérisé en ce que** :

une épaisseur du corps principal (2) est réduite de façon continue du côté arrière à un côté avant opposé au côté arrière,

l'élément d'ouverture/fermeture (3) ayant une partie de flexion (9) ainsi qu'une première région (31) et une seconde région (32) qui sont divisées par la partie de flexion (9), et

la partie de flexion (9) étant en appui contre la surface de placement, et

la première région (31) et la seconde région (32) de l'élément d'ouverture/fermeture (3) formant un angle aigu ($\theta$),

la première région (31) étant une région d'affichage dans laquelle l'unité d'affichage (8) est située et la seconde région (32) étant une région de connexion connectée à l'axe de rotation (C).

2. Dispositif fonctionnel (1) selon la revendication 1,
dans lequel une longueur (t) entre l'axe de rotation (C) et la partie de flexion (9) est plus longue qu'une longueur (hr) entre l'axe de rotation (C) et une surface inférieure du corps principal (2).

3. Dispositif fonctionnel (1) selon la revendication 1 ou 2,
dans lequel un angle ($\theta$) entre la première région (31) et la seconde région (32) est inférieur ou égal à 45°.

4. Dispositif fonctionnel (1) selon l'une quelconque des revendications 1 à 3,
dans lequel une partie bord (22) du côté avant de la surface supérieure fait saillie davantage qu'une partie bord (21) du côté avant d'une surface inférieure du corps principal (2).

5. Dispositif fonctionnel (1) selon l'une quelconque des revendications 1 à 4,
dans lequel, dans un état dans lequel l'élément d'ouverture/fermeture (3) est ouvert, une hauteur (x') entre une partie bord du côté avant de la surface supérieure et la surface de placement est inférieure ou égale à 1/3 d'une hauteur (y') entre la partie bord du côté arrière de la surface supérieure et la surface de placement.

6. Dispositif fonctionnel (1) selon l'une quelconque des revendications 1 à 4,
dans lequel, dans un état dans lequel l'élément d'ouverture/fermeture (3) est ouvert, une distance entre un point (B) où une ligne étendue (A) d'inclinaison de la surface supérieure et la surface de placement se coupent mutuellement et le corps principal (2) est inférieure à la moitié d'une longueur (D) entre la partie bord du côté arrière et une partie bord (22) du côté avant du corps principal (2).

7. Dispositif fonctionnel (1) selon l'une quelconque des revendications 1 à 6,
dans lequel un couple d'une partie charnière qui connecte l'élément d'ouverture/fermeture (3) et le corps principal (2) est différent entre un état dans lequel l'élément d'ouverture/fermeture (3) est ouvert et un état dans lequel l'élément d'ouverture/fermeture (3) n'est pas ouvert.

8. Dispositif fonctionnel (1) selon la revendication 7,
dans lequel, dans un état dans lequel l'élément d'ouverture/fermeture (3) n'est pas ouvert, le couple devient uniforme après qu'un angle ($\theta$couvercle) entre l'élément d'ouverture/fermeture (3) et la surface de placement a dépassé un angle prédéterminé, et, dans un état dans lequel l'élément d'ouverture/fermeture (3) est ouvert, le couple est augmenté si l'angle ($\theta$couvercle) entre l'élément d'ouverture/fermeture (3) et la surface de placement est dans une section prédéterminée.

9. Dispositif fonctionnel (1) selon la revendication 8,
dans lequel un angle de départ de la section prédéterminée est un angle autour de 105°.

10. Dispositif fonctionnel (1) selon la revendication 9,
dans lequel l'angle de départ de la section prédéterminée est un angle de l'ordre de 90 ° à 110 °.

11. Dispositif fonctionnel (1) selon l'une quelconque des revendications 1 à 10,
dans lequel, dans un état dans lequel l'élément d'ouverture/fermeture (3) est poussé dans un état dans lequel le corps principal (2) est placé sur la surface de placement, l'élément d'ouverture/fermeture (3) n'est pas pivoté par rapport au corps principal (2) dans un état dans lequel l'élément d'ouverture/fermeture (3) est ouvert, et l'élément d'ouverture/fermeture (3) est pivoté par rapport au corps principal (2) dans un état dans lequel l'élément d'ouverture/fermeture (3) n'est pas ouvert.

12. Dispositif fonctionnel (1) selon l'une quelconque des revendications 1 à 11,

dans lequel l'élément d'ouverture/fermeture (3) a une partie de flexion (9) pour venir en appui contre la surface de placement, et

dans lequel, quand l'élément d'ouverture/fermeture (3) est ouvert, la partie de flexion (9) appuie contre la surface de placement sur un côté arrière d'un pied d'une ligne perpendiculaire tracée de l'axe de rotation (C) à la surface de placement.

**FIG. 1**

FIG. 2

# FIG. 3

FIG. 4

## FIG. 5

FIG. 6

# FIG. 7

<u>1</u>

FIG. 8

FIG. 9

# FIG. 10

EP 2 911 029 B1

# FIG. 11

FIG. 12

FIG. 13

# FIG. 14

# FIG. 15

# FIG. 16

**FIG. 17**

OPERATION DEVICE

201
CPU

202
ROM

203
RAM

204

BRIDGE ~ 205

206

207
INTERFACE

208
INPUT DEVICE

210
OUTPUT DEVICE

211
STORAGE DEVICE (HDD)

212
DRIVE

215
COMMUNICATION DEVICE

24
REMOVABLE RECORDING MEDIUM

12

1

FIG. 18

**FIG. 19**

## FIG. 20

FIG. 21

FIG. 22

$\theta$ lid

W lid

D cg-lid

D touch

W base

D lever

$\theta$ lever

# FIG. 23

STATE IN WHICH OPENING/CLOSING MEMBER IS NOT OPENED

STATE IN WHICH OPENING/CLOSING MEMBER IS OPENED

TORQUE

L2

T2

L1

T1

0

90°    105°    115°    125°    135°

ANGLE

# FIG. 24

STATE IN WHICH
OPENING/CLOSING
MEMBER IS NOT OPENED

STATE IN WHICH
OPENING/CLOSING
MEMBER IS OPENED

TORQUE

T2

T1

0

90°　　105°　　　　　135°　　ANGLE

# FIG. 25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011065616 A
- JP 2005165637 A